(19) **Europäisches Patentamt**
**European Patent Office**
**Office européen des brevets**

(11) **EP 4 000 131 B1**

(12) **FASCICULE DE BREVET EUROPEEN**

(45) Date de publication et mention de la délivrance du brevet:
**29.11.2023 Bulletin 2023/48**

(21) Numéro de dépôt: **20736356.5**

(22) Date de dépôt: **08.07.2020**

(51) Classification Internationale des Brevets (IPC):
*H01Q 3/26* (2006.01)     *H01Q 21/22* (2006.01)
*H01Q 21/29* (2006.01)    *G01S 7/28* (2006.01)

(52) Classification Coopérative des Brevets (CPC):
**H01Q 3/26; G01S 7/2813; H01Q 21/22; H01Q 21/29**

(86) Numéro de dépôt international:
**PCT/EP2020/069293**

(87) Numéro de publication internationale:
**WO 2021/008977 (21.01.2021 Gazette 2021/03)**

(54) **ANTENNE RESEAU MULTI-PANNEAUX**

GRUPPENANTENNE MIT MEHREREN PANEELEN

MULTI-PANEL ARRAY ANTENNA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2019 FR 1908058**

(43) Date de publication de la demande:
**25.05.2022 Bulletin 2022/21**

(73) Titulaire: **THALES**
**92190 Meudon (FR)**

(72) Inventeurs:
• **GREVERIE, Wilfried**
**91470 Limours (FR)**
• **MARCY, Jean-Pierre**
**91470 Limours (FR)**
• **MOULINET, Ronan**
**91470 Limours (FR)**

(74) Mandataire: **Atout PI Laplace**
**Immeuble "Visium"**
**22, avenue Aristide Briand**
**94117 Arcueil Cedex (FR)**

(56) Documents cités:
FR-A1- 2 784 803      US-A- 4 596 986
US-A1- 2009 135 085   US-A1- 2015 349 434
US-B1- 6 496 158

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

## Domaine technique :

L'invention se situe dans le domaine des dispositifs antennaires, comme les antennes radar, et porte plus particulièrement sur la réalisation d'une antenne réseau de grande taille.

## Technique antérieure :

Les antennes réseau sont des antennes dont la face rayonnante est constituée d'éléments rayonnants élémentaires montés sur une structure mécanique. L'écartement entre les éléments rayonnants, ou pas de la face rayonnante, est figé et est lié à la bande de fréquence de fonctionnement de l'antenne. En modifiant la phase du signal transmis ou reçu par chacun des éléments rayonnants, il est possible d'orienter le gain maximum de l'antenne dans une direction donnée, ce qui les rend particulièrement adaptées pour les applications radars visant à balayer une zone géographique ou à suivre le déplacement d'un objectif au cours du temps (antennes à balayage électronique). La fonction de répartition du rayonnement est constituée d'un lobe principal, ou faisceau, et de lobes secondaires. La modification de l'amplitude des signaux élémentaires permet en outre de contrôler la qualité des faisceaux formées et avantageusement leur niveaux de lobes secondaires.

Actuellement, la dimension d'une antenne réseau est ajustée en fonction d'un besoin opérationnel précis. Une fois l'antenne construite, les performances de l'antenne telles que son gain ou sa résolution angulaire sont figées.

Pour augmenter les performances, il n'y a pas d'autre choix que de développer une nouvelle antenne de plus grande taille comprenant un plus grand nombre d'éléments rayonnants, ce qui s'avère long et coûteux. En outre, les difficultés et coûts de transport et de déploiement de l'antenne augmentent avec sa taille.

Il existe donc un besoin pour un système permettant d'adapter la taille d'une antenne réseau au besoin opérationnel sans requérir la fabrication d'une nouvelle antenne. Il existe également un besoin pour une antenne réseau de taille importante pouvant être facilement transportée et déployée.

Le brevet US 6.496.158 B1 décrit un système antennaire multipanneaux dans lequel l'espace entre les panneaux est ajusté pour limiter les produits d'intermodulation. La demande de brevet FR 2.784.803 A1 traite d'une antenne comprenant plusieurs sous-réseaux. La demande de brevet US 4.596.986 A décrit une méthode permettant d'annuler les brouilleurs arrivant dans le lobe secondaire d'une antenne réseau. La demande de brevet US 2009/135085 A1 décrit une antenne réseau modulaire. La demande de brevet US 2015/349434 A1 décrit une antenne réseau formée de deux réseaux d'éléments rayonnants.

## Résumé de l'invention :

A cet effet, l'invention porte sur une antenne réseau comprenant :

- une pluralité de panneaux rayonnants mécaniquement disjoints disposés côte à côte, chaque panneau rayonnant comprenant une pluralité d'éléments rayonnants,
- des moyens d'application d'une mise en forme à des signaux radiofréquence transmis par ou reçus depuis chaque élément rayonnant, et
- un dispositif de gestion des moyens d'application d'une mise en forme des signaux radio fréquence.

Dans l'antenne réseau selon l'invention, les moyens d'application d'une mise en forme sont configurés pour appliquer au signal transmis par ou reçu de chaque élément rayonnant un coefficient complexe de mise en forme correspondant à une somme entre au moins :

- un coefficient de mise en forme permettant d'orienter le gain maximum de l'antenne dans une direction donnée, et
- au moins l'opposé d'un coefficient de mise en forme permettant d'orienter le gain maximum de l'antenne dans la direction d'un lobe secondaire résultant d'écarts entre les panneaux rayonnants de l'antenne réseau.

Avantageusement, la somme utilisée pour calculer le coefficient de mise en forme appliqué aux éléments rayonnants comprend en outre un coefficient de calibration.

Selon un mode de réalisation, le coefficient de mise en forme permettant d'orienter le gain maximum de l'antenne dans une direction donnée est calculé à partir de la direction de pointage souhaitée de l'antenne réseau, de la fréquence du signal radiofréquence, de la position de l'élément rayonnant considéré au sein de l'antenne réseau, et du nombre d'éléments rayonnants total de l'antenne réseau.

Selon un mode de réalisation, le coefficient de mise en forme permettant d'orienter le gain maximum de l'antenne dans la direction d'au moins un lobe secondaire résultant d'écarts entre les panneaux rayonnants de l'antenne réseau est calculé à partir de la direction dudit lobe secondaire, de la fréquence du signal radiofréquence, de la position de l'élément rayonnant considéré au sein de l'antenne réseau, et du nombre d'éléments rayonnants total de l'antenne réseau.

Avantageusement, l'antenne réseau comprend en outre des moyens de sommation des signaux reçus de chacun des éléments rayonnants et mis en forme.

L'invention porte également sur un procédé d'émission ou de réception d'un signal radiofréquence pour une antenne réseau comprenant une pluralité de panneaux rayonnants disposés côte à côte, chaque panneau rayonnant comprenant une pluralité d'éléments rayonnants. Le procédé comprend alors l'application d'un coefficient complexe de mise en forme au signal transmis par ou reçu de chaque élément rayonnant. Ce coefficient de mise en forme complexe correspond à une somme entre au moins :

- un coefficient de mise en forme permettant d'orienter le gain maximum de l'antenne réseau dans une direction donnée, et
- au moins l'opposé d'un coefficient de mise en forme permettant d'orienter le gain maximum de l'antenne dans la direction d'un lobe secondaire résultant d'écarts entre les panneaux rayonnants de l'antenne réseau.

Avantageusement, le procédé comprend en outre une étape préalable de caractérisation de lobes secondaires résultant d'écarts entre les panneaux rayonnants de l'antenne réseau.

## Brève description des figures :

L'invention sera mieux comprise et d'autres caractéristiques et avantages apparaîtront mieux à la lecture de la description qui suit, donnée à titre non limitatif, et grâce aux figures annexées.

[Fig. 1a] La figure 1a représente schématiquement le panneau rayonnant d'une antenne réseau unitaire.

[Fig. 1b] La figure 1b représente une configuration de panneaux rayonnants disjoints, indépendants au sens des réseaux antennaires.

[Fig. 1c] La figure 1c représente un panneau rayonnant pour antenne réseau réalisé à partir de l'association jointive de quatre panneaux rayonnants de taille inférieure.

[Fig. 1d] La figure 1d représente un panneau rayonnant pour antenne réseau réalisé à partir de l'association disjointe de quatre panneaux rayonnants de taille inférieure.

[Fig. 2] La figure 2 représente les principaux éléments d'une antenne réseau unitaire selon l'état de l'art.

[Fig. 3] La figure 3 représente les principaux éléments d'une antenne réseau selon un mode de réalisation de l'invention.

[Fig. 4a] La figure 4a compare le diagramme de rayonnement d'une antenne réseau obtenu à partir d'un réseau disjoint et d'un réseau joint de panneaux rayonnants.

[Fig. 4b] La figure 4b compare le diagramme de rayonnement d'une antenne réseau obtenu à partir d'un réseau disjoint de panneaux rayonnants, avec et sans prise en compte des interférences générées par les écarts entre panneaux rayonnants.

[Fig. 5a] La figure 5a représente le faisceau d'une antenne réseau constituée d'un réseau jointif de panneaux rayonnants.

[Fig. 5b] La figure 5b représente le faisceau d'une antenne réseau constituée d'un réseau jointif de panneaux rayonnants lorsque les coefficients de mise en forme des signaux transmis ou reçus par les éléments rayonnants sont ajustés pour prendre en compte les interférences entre panneaux rayonnants.

[Fig. 6] La figure 6 représente les principales étapes d'un procédé d'émission ou de réception d'un signal RF mis en oeuvre à partir d'une antenne réseau selon un mode de réalisation de l'invention.

[Fig. 7] La figure 7 illustre plus en détail l'étape d'émission/réception du signal RF d'un mode de réalisation du procédé revendiqué.

Par la suite, lorsque des mêmes références sont utilisées dans des figures, elles désignent les mêmes éléments.

## Description détaillée :

Les antennes radar actuelles ont des dimensions qui sont ajustées par rapport à un besoin opérationnel et une densité de menace précis. L'amélioration du gain ou de la précision de l'antenne nécessite la fabrication d'une nouvelle antenne de taille plus importante.

La présente invention propose de répondre à ces problèmes en réalisant une antenne réseau à partir d'antennes réseaux de dimensions inférieures. Ainsi, il est possible d'ajuster dynamiquement la taille et les performances de l'antenne en fonction du besoin de portée, en ajoutant ou en supprimant des antennes. Il résulte de cette association d'éléments indépendants d'un point de vue mécanique un radar de grande taille, performant et dont le transport et déploiement est aisé par rapport au transport et au déploiement d'une antenne de taille équivalente.

Pour ceci, dans un premier temps, différentes techniques d'association d'antennes réseau sont présentées et leurs avantages/inconvénients discutés.

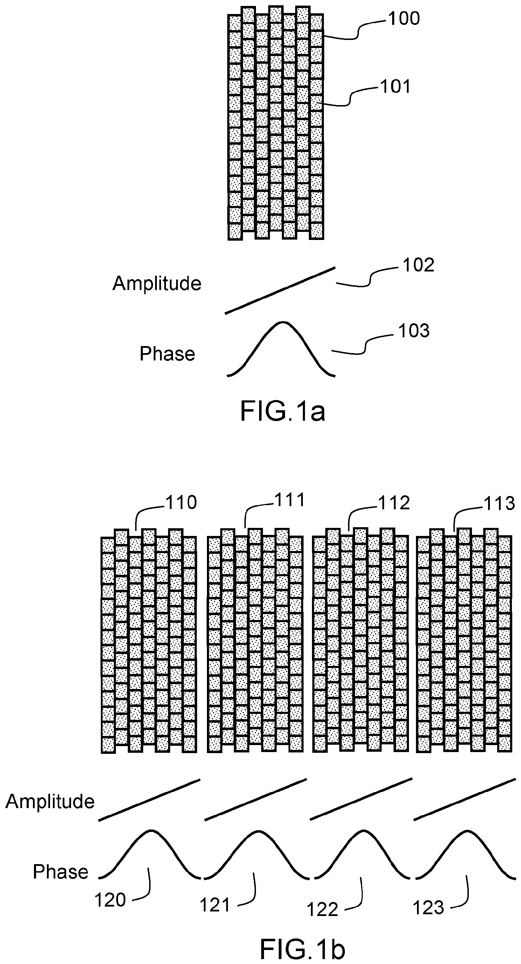

La figure 1a représente schématiquement le panneau rayonnant d'une antenne réseau unitaire. Elle comprend un panneau rayonnant 100 composé d'une pluralité d'éléments rayonnants 101 répartis selon une maille de pas régulier. Lorsqu'utilisée en émission, le signal radiofréquence (RF) à émettre est mis en forme puis transmis par chacun des éléments rayonnants. La mise en forme consiste à modifier la phase du signal RF, et avantageusement son amplitude, pour chacun des éléments rayonnants indépendamment de manière à orienter le gain maximum de l'antenne dans la direction souhaitée. Lorsqu'utilisée en réception, le signal RF reçu de chaque élément rayonnant est mis en forme de manière à obtenir le gain maximum de l'antenne dans une direction donnée. Ces opérations sont connues sous le nom de « formation de faisceaux », en anglais « beamforming ».

La mise en forme des faisceaux est donnée par une loi de commande, une loi en phase 103 et avantageusement une loi en amplitude 102, à appliquer au signal RF à émettre ou à recevoir sur chacun des éléments rayonnants du panneau rayonnant. Le déphasage appliqué permet d'orienter le gain maximum de l'antenne dans la direction souhaitée. Ce déphasage est constant entre deux éléments rayonnants consécutifs, et sa valeur est directement liée à la longueur d'onde du signal RF, au pas de la face rayonnante et au pointage du faisceau souhaité. La loi de commande en amplitude permet de concentrer la puissance au centre de l'antenne, et donc de réduire le niveau de lobes secondaires. La loi de commande en amplitude est donc avantageuse mais n'est pas indispensable pour pointer le faisceau de l'antenne, la plupart des antennes réseau à balayage connues de l'état de l'art n'étant pilotées que par une commande en phase à l'émission.

La figure 1b représente une configuration de quatre panneaux rayonnants unitaires disjoints, indépendants au sens des réseaux antennaires. Les panneaux rayonnants 110, 111, 112 et 113 focalisent tous dans la même direction angulaire, sans tenir compte de la présence des panneaux voisins. Pour ceci, la même loi de commande 120, 121, 122, 123 est attribuée à chacun des panneaux rayonnants. De cette manière, lorsqu'utilisés en émission, le signal total émis est la recombinaison de chacun des signaux, ce qui permet d'améliorer la puissance d'émission. Lorsqu'utilisés en réception, le signal reçu sur chacun des panneaux rayonnants peut-être sommé afin d'améliorer le rapport signal à bruit.

Cependant, la résolution angulaire n'est pas améliorée par rapport à la configuration de la figure 1a. En outre, les émissions des différents panneaux interfèrent, ce qui engendre des pertes de gain et l'apparition de lobes secondaires en particulier pour des dépointages importants.

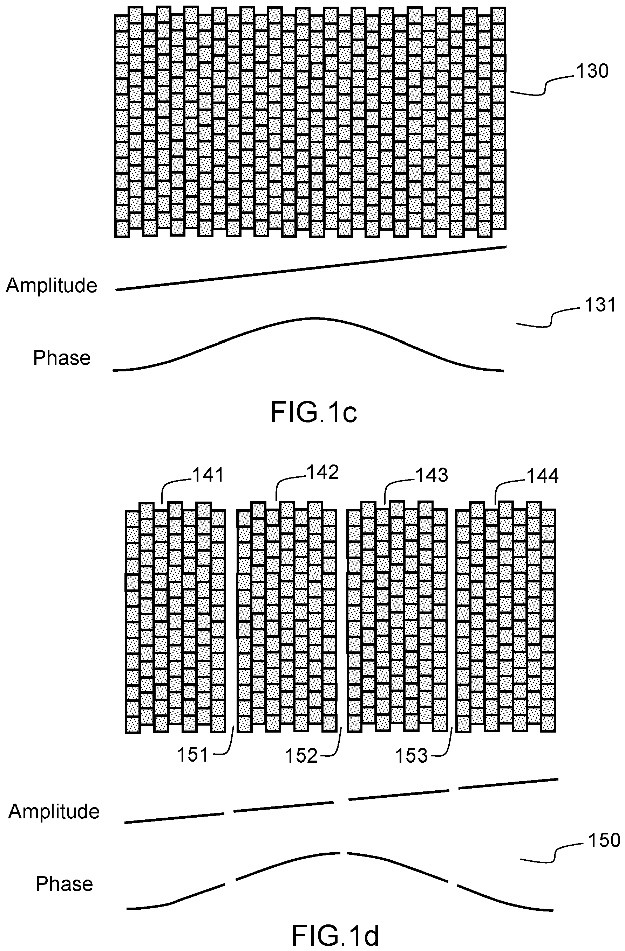

La figure 1c représente un panneau rayonnant 130 pour antenne réseau réalisé à partir de l'association jointive de quatre panneaux rayonnants de taille inférieure, tels que représentés à la figure 1a. La loi de commande 131 appliquée aux éléments rayonnants est adaptée par rapport à la surface totale du panneau rayonnant 130, via un calcul centralisé des phases, et avantageusement des amplitudes, de focalisation à appliquer. Ainsi, la résolution angulaire et le gain de l'antenne sont améliorés par rapport à la configuration de la figure 1a. Cependant, ce cas est un cas théorique vers lequel il faut tendre, dans lequel le panneau rayonnant réalisé à partir de plusieurs panneaux rayonnants joints est continu. En pratique, les antennes ont des bords qui font qu'il est impossible d'obtenir un réseau jointif parfait comme celui représenté à la figure 1c.

La figure 1d représente un panneau rayonnant pour antenne réseau réalisé à partir de l'association disjointe de quatre panneaux unitaires disjoints 141, 142, 143 et 144, tels que représentés à la figure 1a. La loi de commande 150 appliquée aux éléments rayonnants est adaptée par rapport à la surface totale du panneau rayonnant 130, via un calcul centralisé des phases, et avantageusement des amplitudes, de focalisation à appliquer. Cependant, les panneaux rayonnants ne pouvant être disposés de manière jointive à cause de leurs bords, l'antenne réseau globale n'est pas continue. Les espaces 151, 152 et 153 entre panneaux rayonnants (translation selon trois axes) et leur alignement (rotations selon trois axes) entraînent des ruptures dans la face rayonnante totale.

Si les performances en termes de résolution angulaire et de gain sont améliorées par rapport aux configurations des figures 1a et 1b, les ruptures de la face rayonnante dégradent la focalisation du faisceau. En effet, la loi de commande en phase est calculée de manière à ce que la contribution de chaque élément rayonnant interfère avec celle des autres éléments rayonnants de manière à orienter le faisceau de l'antenne. Les espaces entre les panneaux rayonnants s'apparentent à des absences d'éléments rayonnants, dont la contribution est nécessaire à la bonne formation du faisceau. Le faisceau résultant est donc dégradé, avec pour conséquences des pertes de gain dans la direction visée, une moins bonne directivité et l'apparition de lobes secondaires.

L'objet de la présente invention consiste à réaliser une antenne réseau à partir de plusieurs panneaux rayonnants disposés côte à côte de manière non jointive, comme dans l'exemple de la figure 1d, et à modifier la loi de commande des éléments rayonnants de manière à prendre en compte les espaces et différences d'alignements entre les divers panneaux rayonnants lors de la formation du faisceau. Pour ceci, l'antenne globale est vue comme correspondant à la somme de deux surfaces rayonnantes : une première surface rayonnante correspondant à l'ensemble de la surface des panneaux rayonnants (y compris les espaces entre panneaux rayonnants), et une deuxième surface correspondant aux espaces entre les panneaux rayonnants. Cette deuxième surface équivaut à un réseau virtuel de petites surfaces rayonnantes générant les interférences qui viennent dégrader le faisceau généré par la première surface. Tant que les espaces entre panneaux rayonnants sont petits rapportés à la dimension de ces derniers (typiquement inférieurs à quelques longueurs d'onde) il est possible d'évaluer le diagramme de rayonnement de la deuxième surface, et de l'opposer au diagramme de rayonnement de la première surface pour obtenir un diagramme de rayonnement global dont le niveau des lobes secondaires occasionnés par le caractère non jointif des panneaux rayonnants est réduit. Ceci est possible en modifiant les coefficients d'amplitude et phase des signaux transmis aux éléments rayonnants formant la surface rayonnante globale.

Dans l'exemple de la figure 1d, les panneaux rayonnants sont disposés côte à côte horizontalement, de manière à augmenter la largeur de l'antenne réseau globale, et d'améliorer ainsi la résolution angulaire en azimut. Ils pourraient cependant de manière équivalente être disposés côte à côte verticalement pour améliorer la résolution angulaire en élévation, ou selon les deux axes.

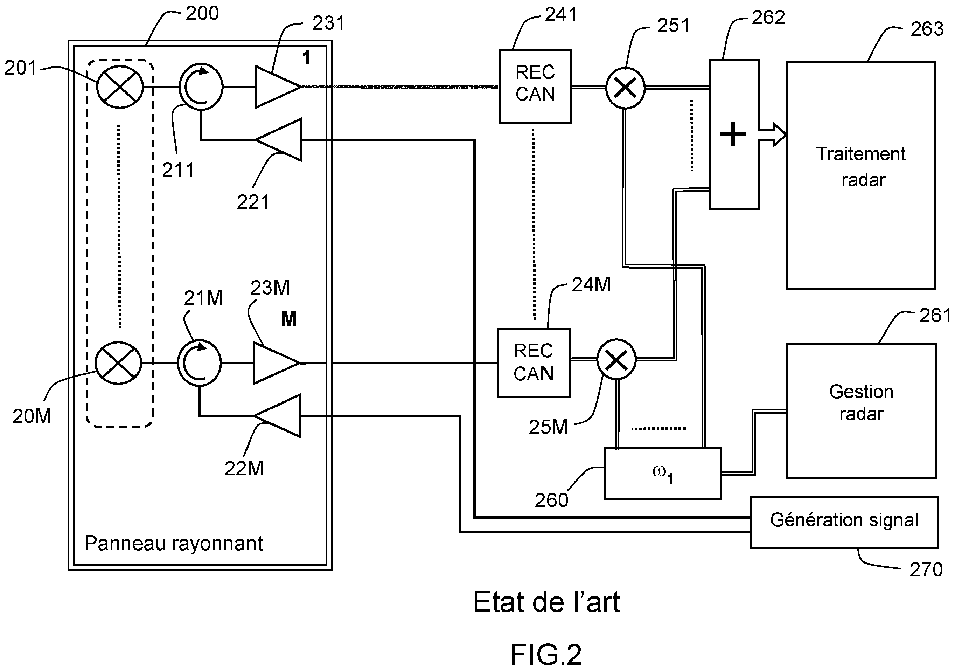

La figure 2 représente les principaux éléments d'une antenne réseau unitaire selon l'état de l'art. Dans la terminologie adoptée, le mot « antenne réseau » englobe à la fois les panneaux rayonnants et les composants nécessaires pour mettre en oeuvre les traitements de formation de faisceau. Les antennes réseau présentées par la suite à titre d'illustration sont utilisées en réception, car pour les applications radar, le signal RF est généralement émis en utilisant des amplificateurs à fort rendements, comme par exemple des amplificateurs de classe C, ne permettant pas la variation d'amplitude du signal transmis. C'est donc en réception que l'invention s'applique le plus complètement, d'une part pour des faisceaux à niveaux de lobes secondaires faibles, et d'autre part parce que la modulation de la commande des signaux est possible en phase et en amplitude. Cependant, l'invention s'appliquerait de manière identique pour piloter le faisceau en émission.

Le panneau rayonnant 200 de la figure 2 comprend M éléments rayonnants 201 à 20M. Un circulateur 211 à 21M permet de commuter chaque élément rayonnant entre une fonction d'émission dans lequel il reçoit un signal à émettre, et une fonction de réception dans lequel il reçoit un signal RF et le transmet vers des équipements de traitement dédiés.

Lorsque l'antenne est utilisée en émission, le signal RF à transmettre est généré par un équipement dédié 270 de génération d'un signal RF analogique, amplifié par une chaîne d'amplification commune à tous les éléments rayonnants ou une chaîne d'amplification 221 à 22M propre à chaque élément rayonnant, puis émis par les éléments rayonnants.

Lorsque l'antenne est utilisée en réception, le signal reçu sur chacun des éléments rayonnants est transmis à un amplificateur faible bruit 231 à 23M puis numérisé par un convertisseur analogique vers numérique 241 à 24M. Un coefficient de mise en forme propre à chaque élément rayonnant, correspondant idéalement à un déphasage et à une atténuation, est appliqué en 251 à 25M sur le signal numérique. La valeur du déphasage et de l'atténuation est ajustable et est fonction de la direction souhaitée du faisceau de l'antenne. Ces coefficients sont généralement pré-calculés et stockés dans une table $\omega_1$ 260 comprenant l'ensemble des coefficients d'atténuation et déphasages des différents éléments rayonnants en fonction de la direction du faisceau de l'antenne. Les valeurs de la table 260 sont programmées en fonction de la direction souhaitée par un dispositif de gestion du radar 261. Enfin, les signaux RF reçus des différents éléments rayonnants et mis en forme sont sommés 262, puis traités par les algorithmes de traitements du signal 263 propres à l'application visée.

L'arrangement montré à la figure 2 est donné à titre d'illustration, et peut être adapté à la marge par l'homme du métier sans que cela n'empêche la mise en oeuvre de l'invention. Par exemple, il serait possible d'inverser la position des convertisseurs analogiques numériques 241 à 24M et des dispositifs de mise en forme du signal 251 à 25M. Dans ce cas, la mise en forme est faite sur le signal analogique par des noeuds de contrôle comprenant des atténuateurs et des déphaseurs. D'autres ajustements apparaîtront de manière évidente, comme par exemple :

- limiter la loi de commande à une loi de phase,

- dédier l'antenne à la réception d'un signal RF en supprimant les circulateurs 211, 21M et toute la partie émission (270, 221, 22M),
- appliquer les atténuations et déphasages $\omega_1$ à l'émission plutôt qu'à la réception, et potentiellement dédier l'antenne à la réception d'un signal RF en supprimant les circulateurs 211, 21M et toute la partie réception (231, 23M, 241, 24M, 262, 263),
- appliquer les atténuations et déphasages $\omega_1$ à la fois pour l'émission et pour la réception.

Les valeurs de la table $\omega_1$ 260 sont calculées de manière théorique à partir du nombre d'éléments rayonnants, de leurs positions respectives, de la taille et du pas de la maille rayonnante, ainsi que de la fréquence de fonctionnement considérée. Avantageusement, ils peuvent être complétés par des coefficients d'ajustements prenant en compte les imperfections des diagrammes de rayonnements de chaque élément rayonnant et les imperfections liées à la structure du panneau rayonnants, ces imperfections étant caractérisées en usine lors d'une phase de calibration. Un procédé habituel consiste à effectuer des mesures de champ proche du panneau antenne pour obtenir par rétro-propagation (calcul de type transformée de Fourier inverse) le niveau de signal réalisé pour chaque élément rayonnant et connaître l'écart à la distribution de signal théorique donnant la focalisation maximale.

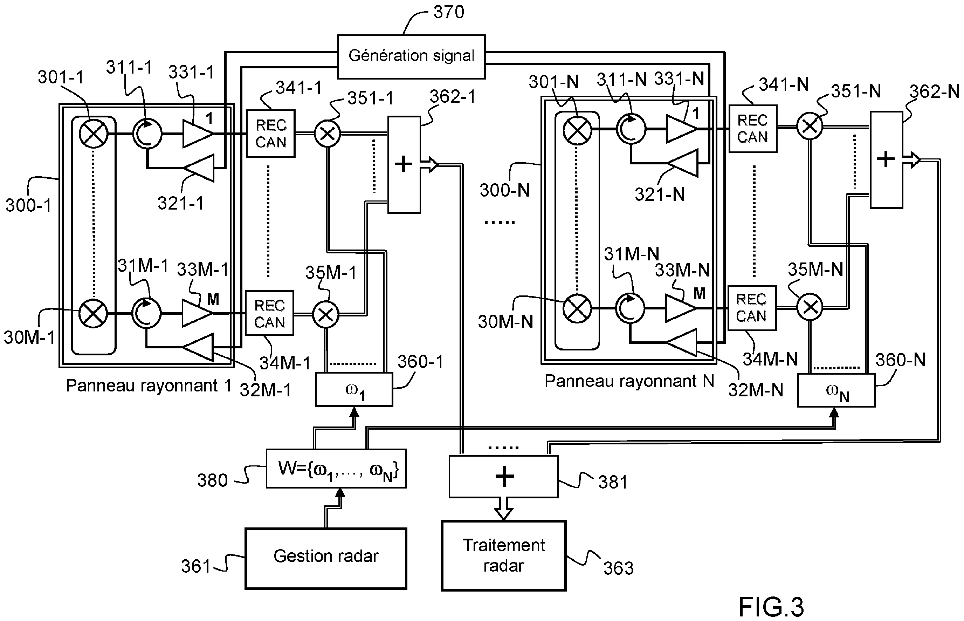

La figure 3 représente les principaux éléments d'une antenne réseau selon un mode de réalisation de l'invention. Cette antenne comprend $N$ panneaux rayonnants 300-1, 300-N tels que décrits à la figure 2, reliés à un dispositif de gestion centralisé 361 des lois de commande, tel que représenté à la figure 1d.

Chaque panneau rayonnant comprend donc $M$ éléments rayonnants 301-1, 30M-1, 301-N, 30M-N, reliés chacun à un circulateur 311-1, 31M-1, 311-N, 31M-N permettant de commuter entre émission et réception.

Pour simplifier la description, l'hypothèse a été faite que l'antenne réseau était composée de plusieurs panneaux rayonnants de tailles strictement identiques. Cependant, l'invention s'appliquerait de manière équivalente pour une antenne réseau composée de panneaux rayonnants de tailles différentes. A surface rayonnante égale, les résultats obtenus seraient comparables.

En émission, le signal RF analogique à émettre est généré par un dispositif 370 et amplifié par les chaînes d'amplification 321-1, 32M-1, 321-N, 32M-N.

En réception, les signaux reçus de chaque élément rayonnant sont amplifiés par les amplificateurs faible bruit 331-1, 33M-1, 331-N, 33M-N, numérisés par les convertisseurs analogiques-numériques 341-1, 34M-1, 341-N, 34M-N, puis mis en forme. La table de coefficients $\omega_1$ 360-1 contient les atténuations et déphasages appliqués à chacun des signaux RF reçus des éléments rayonnants 351-1, 35M-1 de l'antenne 1, tandis que la table de coefficients $\omega_N$ 360-N contient les atténuations et déphasages appliqués aux signaux RF reçus des éléments rayonnants 351-N, 35M-N de l'antenne $N$. Les signaux sont ensuite sommés par les sommateurs 362-1 et 362-N.

Les coefficients de mise en forme $\omega_1$ et $\omega_N$ sont fournis par une table 380 de plus haut niveau, qui comprend les tables de coefficients pour une ou plusieurs configurations de panneaux rayonnants. Un dispositif centralisé de gestion radar 361 est en charge de calculer ou de sélectionner les tables de coefficients en fonction des informations d'agencement des panneaux rayonnants, de la fréquence de fonctionnement et de l'orientation visée du faisceau de l'antenne. Ce dispositif se présente généralement sous la forme d'un logiciel embarqué sur un dispositif de calculs tel qu'un processeur, un processeur de signal numérique (plus connu sous le sigle anglais de DSP pour « Digital Signal Processor »), ou un circuit spécialisé tel qu'un ASIC (acronyme anglais pour « Application Spécifie Integrated Circuit ») ou un FPGA (sigle anglais pour « Field-Programmable Gate Array »).

Enfin, les signaux reçus des différentes antennes sont sommés 381, puis transmis à un logiciel de traitement radar 363 pour la mise en oeuvre des algorithmes de traitement du signal nécessaires aux applications visées.

La structure d'antenne réseau multi-panneaux rayonnants représentée en figure 3 est donnée à titre d'illustration, et peut être adaptée à la marge sans remettre en cause le principe même de l'invention, par exemple en :

- mettant en forme le signal RF émis par chaque élément rayonnant,
- numérisant le signal après la mise en forme des signaux RF,
- limitant l'antenne à l'émission ou à la réception,
- récupérant directement les coefficients de mise en forme (atténuation et déphasage) utilisés en 351-1, 35M-1, 351-N et 35M-N dans la table W 380,
- réalisant l'ensemble des sommations 362-1, 362-N et 381 en une seule étape.

L'antenne multi-panneaux selon l'invention a pour avantage que la loi de commande des pondérations appliquées aux signaux RF reçus des différents éléments rayonnants prend en compte l'ensemble de la face rayonnante de l'antenne multi-panneaux, la fréquence de fonctionnement et la direction de pointage souhaitée, mais également les imperfections dues aux ruptures de la face rayonnante provoquées par les espaces entre panneaux rayonnants et leurs variations d'alignements.

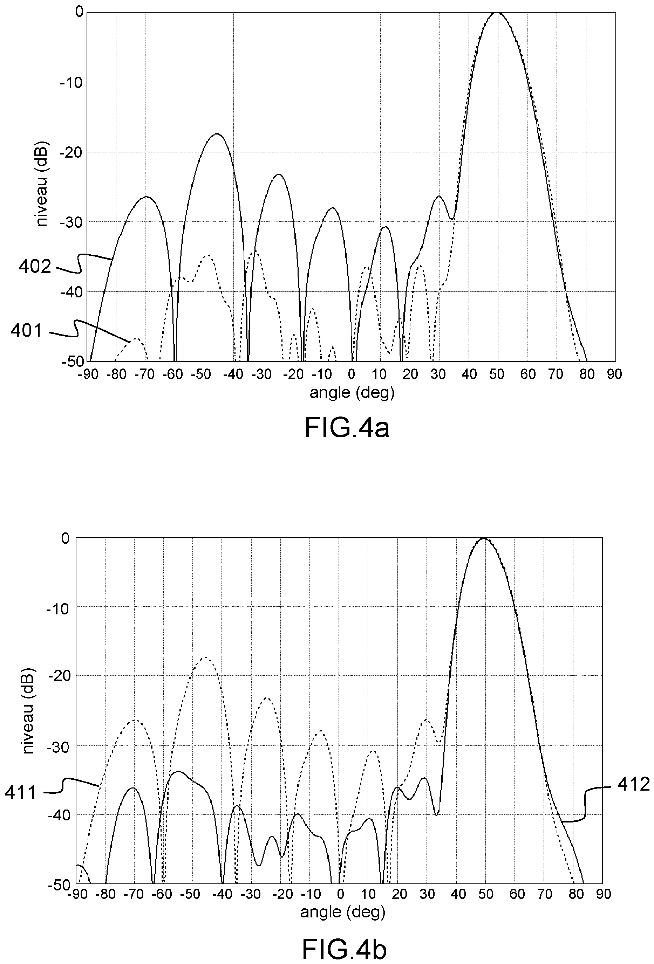

La figure 4a représente, en pointillés 401, le diagramme de rayonnement obtenu par la mise en oeuvre d'un réseau jointif idéal de panneaux rayonnants, tel que représenté à la figure 1c. Le diagramme de rayonnement y est représenté pour des angles compris entre -90° et +90°. Le lobe principal, qui correspond à la direction de pointage du faisceau pointe dans l'exemple à 50° d'azimut. Dans les autres directions, les émissions sont atténuées d'au moins 35 dB par rapport au lobe principal.

La figure 4a représente également, en traits continus 402, le diagramme de rayonnement obtenu par la mise en oeuvre d'un réseau disjoint de panneaux rayonnants, tel que représenté à la figure 1d, sans compensation des interférences générées par les espaces entre les panneaux. Des lobes secondaires, dont le niveau est environ 20 dB à 30 dB en dessous du niveau du lobe principal, apparaissent pour des angles d'environ -70°, -45°, -25°, -5° et 30°. Un des buts de l'invention est de réduire le niveau ou supprimer ces lobes secondaires, qui sont ici environ 10 à 20 dB plus élevés que pour le réseau jointif.

Pour ceci, le faisceau du diagramme global de l'antenne réseau peut s'exprimer comme l'équation (1) ci-dessous :

$$\overrightarrow{F\left(\vec{k}, \overrightarrow{k_0}, f\right)}$$

$$= \sum_{n=1}^{N} \sum_{m=1}^{M} \left[ W_c \left[\overrightarrow{K_P}, \overrightarrow{(r^{\langle n \rangle})_m}, f\right]_{n,m} \cdot W_{co} \left[\overrightarrow{k_0}, \overrightarrow{(r^{\langle n \rangle})_m}, f\right]_{n,m} \cdot W \left[\vec{k}, \overrightarrow{(r\_r^{\langle n \rangle})_m}, f\right]_{n,m} \cdot f(\vec{k})_{n,m} \right]$$

avec :

- $N$ le nombre de panneaux rayonnants,
- $M$ le nombre d'éléments rayonnants par panneau,
- $P$ le nombre de lobes secondaires générés par les écarts entre les panneaux rayonnants,
- $W_c [\overrightarrow{K_P}, \overrightarrow{(r^{\langle n \rangle})_m}, f]_{n,m}$ le premier terme de l'équation, correspondant aux coefficients de mise en forme appliqués à l'élément rayonnant $n, m$ pour pointer le faisceau de l'antenne dans la direction de chacun des lobes secondaires, à la fréquence $f$,
- $W_{co} [\overrightarrow{k_0}, \overrightarrow{(r^{\langle n \rangle})_m}, f]_{n,m}$ le deuxième terme de l'équation, correspondant au coefficient de mise en forme appliqué à l'élément rayonnant $n,$ m pour pointer le faisceau de l'antenne dans la direction de pointage souhaitée pour le lobe principal, à la fréquence f,
- $W[\vec{k}, \overrightarrow{(r\_r^{\langle n \rangle})_m}, f]_{n,m}$ le troisième terme de l'équation, correspondant au facteur de phase affectant le signal issu des éléments rayonnants, affecté le cas échéant d'un coefficient de calibration, à la fréquence f,
- $f(\vec{k})_{n,m}$ le quatrième terme de l'équation, correspondant au diagramme élémentaire formé par l'élément rayonnant $n,$ m,

$$\vec{k} = \begin{pmatrix} u \\ v \\ w \end{pmatrix}$$

- $\vec{k}$ représente une direction dans l'espace, avec $u, v$ et $w$ étant des directions selon trois axes d'un repère orthonormé,
- $\overrightarrow{k_0}$ représente la direction de pointage du lobe principal de l'antenne réseau,
- $f$ est la fréquence d'utilisation de l'antenne réseau,
- $\overrightarrow{K_p}$ est un vecteur comprenant la direction de chacun des P lobes secondaires générés par les écarts entre panneaux rayonnants,
- $(r^{\langle n \rangle})_m$ est la position de l'élément rayonnant m du panneau rayonnant $n$ dans le référentiel de l'antenne réseau,
- $\overrightarrow{(r\_r^{\langle n \rangle})_m}$ est la position de chaque élément rayonnant effectivement réalisée et exprimée dans un repère global,
- $f(\vec{k})_{n,m}$ est le diagramme élémentaire de l'élément rayonnant $n,$ m.

Le premier terme de l'équation, en $W_c [\overrightarrow{K_p}, \overrightarrow{(r^{\langle n \rangle})_m}]$, correspond aux P coefficients de mise en forme $\omega_c$ devant être appliqués à chacun des éléments rayonnants pour pointer le faisceau de l'antenne réseau dans chacune des P directions $\overrightarrow{K_p}$ des lobes secondaires de l'antenne, lorsque l'on considère une loi de commande prenant compte de la totalité de l'antenne réseau, soit

$$W_c\left[\overrightarrow{K_p}, \overrightarrow{(r^{\langle n \rangle})_m}\right] = \left[\left[\omega_c\left[\overrightarrow{K_p}, \overrightarrow{(r^{\langle 1 \rangle})_m}\right]_{1..M}\right]^{\langle 1 \rangle} \cdots \left[\omega_c\left[\overrightarrow{K_p}, \overrightarrow{(r^{\langle N \rangle})_m}\right]_{1..M}\right]^{\langle N \rangle}\right].$$

Pour chaque direction $\overrightarrow{K_p}$, le coefficient de mise en forme $\omega_c$ correspondant est obtenu à partir de la loi de commande associée permettant de pointer le faisceau de l'antenne réseau dans la direction du lobe secondaire considéré, au niveau souhaité. Il s'agit donc d'un coefficient complexe amplitude/phase.

Le deuxième terme de l'équation, en $W_{co}[\overrightarrow{k_0}, \overrightarrow{(r^{\langle n \rangle})_m}]$ correspond à la loi de commande à appliquer aux différents éléments antennaires pour pointer le faisceau de l'antenne réseau dans la direction souhaitée, lorsque l'on considère une loi de commande prenant compte de la totalité de l'antenne réseau. On a alors :

$$W_{co}\left[\overrightarrow{k_0}, \overrightarrow{(r^{\langle n \rangle})_m}\right] = \left[\left[\omega_{co}\left[\overrightarrow{k_0}, \overrightarrow{(r^{\langle 1 \rangle})_m}\right]_{1..M}\right]^{\langle 1 \rangle} \cdots \left[\omega_{co}\left[\overrightarrow{k_0}, \overrightarrow{(r^{\langle N \rangle})_m}\right]_{1..M}\right]^{\langle N \rangle}\right],$$

avec :

- $\omega_{co}$ le coefficient de mise en forme correspondant à la direction visée.

Le coefficient $\omega_{co}$ peut donc correspondre à un déphasage uniquement, ou avantageusement être un coefficient complexe amplitude/phase.

Le troisième terme de l'équation, en $W[\vec{k}, \overrightarrow{(r\_r^{\langle n \rangle})_m}]$, correspond au facteur de phase du signal capté par chaque élément rayonnant pour prendre en compte les interférences entre les éléments rayonnants. Ce facteur de phase peut contenir un coefficient de calibration généralement obtenu lors d'une phase de calibration réalisée pendant la fabrication de chaque panneau rayonnant.

Le quatrième terme de l'équation, en $f(\vec{k})_{n,m}$, représente le diagramme élémentaire de l'élément rayonnant $n,m$. Il permet de prendre en compte les légères différences pouvant exister entre les diagrammes des différents éléments rayonnants, et donc les effets de couplages mutuels entre éléments rayonnants. Il peut être exprimé en :

$$f(\vec{k})_{n,m} = E_{inc}\left[Mr_n\left(\overrightarrow{h(\vec{k}, f)}\right)_{n,m}\right]$$

avec :

- $E_{inc}$ la polarisation d'une onde plane incidente,
- $Mr_n$ une matrice de rotation associée à l'élément rayonnant $n$.

De manière à réduire les lobes secondaires dus à la présence d'écarts entre les différents panneaux rayonnants, l'invention propose d'appliquer à chacun des éléments rayonnants un coefficient de mise en forme complexe calculé sur le principe de la soustraction dans la direction connue de chacun des lobes parasites d'un lobe équivalent de niveau égal à celui du lobe parasite. La connaissance du lobe parasite est déterminée par la connaissance de la position des éléments du réseau global installé sur son site d'utilisation. Le coefficient d'un élément rayonnant est égal au coefficient $\omega_{co}$, requis pour orienter le gain maximum de l'antenne dans une direction donnée, moins les coefficients $\omega_c$ correspondants aux directions des lobes secondaires affectés des niveaux des lobes secondaires parasites. De cette manière, l'effet des espaces entre panneaux rayonnants est compensé et le niveau des lobes secondaires diminué.

Avantageusement, le coefficient de mise en forme en phase et en amplitude appliqué à chaque élément rayonnant prend en compte le coefficient de calibration pris en compte dans le $W$ de l'équation (1).

La figure 4b représente, en pointillés 411, le diagramme de rayonnement obtenu par un réseau disjoint de panneaux rayonnants, tel que représenté à la figure 1d, sans compensation des interférences dues aux espaces entre les panneaux, correspondant au diagramme de rayonnement 402 de la figure 4a.

Le diagramme de rayonnement 412, en traits pleins, est obtenu par le même réseau disjoint de panneaux rayonnants, après mise en oeuvre de la compensation des coefficients de mise en forme décrite par l'invention. On y observe que les lobes secondaires, à -70°, -45°, -25°, -5° et 30° ont été atténués et sont revenus à des niveaux comparables à ceux obtenus pour une antenne idéale composée de panneaux rayonnants joints, soit une réduction de 10 à 20dB du niveau de chacun de ces lobes secondaires.

Le panneau rayonnant multi-antennaire selon l'invention permet donc bien de réduire le niveau de lobes secondaires générés par les écarts entre panneaux rayonnants. Le nombre de lobes secondaires générés par les espaces entre panneaux rayonnants dépend de la fréquence de fonctionnement et de la direction de pointage. Le nombre P de lobes secondaires traités dépend de leur niveau et des exigences sur la directivité du faisceau, et doit donc être évalué au regard des besoins opérationnels et de la puissance de calcul disponible.

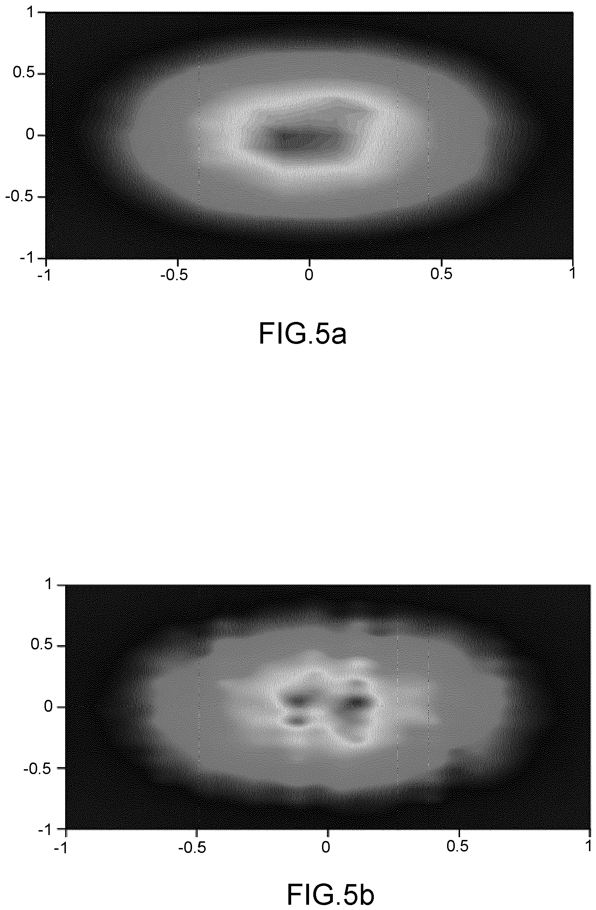

La figure 5a représente le faisceau d'une antenne réseau constituée d'un réseau jointif idéal de panneaux rayonnants. Le faisceau est bien centré autour de la direction visée. La figure 5b représente le faisceau d'antenne émis par le même réseau jointif idéal de panneaux rayonnants lorsque les coefficients de commande en phase et en amplitude sont modifiés pour prendre en compte les interférences générées par les espaces entre les panneaux rayonnants. Le faisceau est plus diffus que celui de la figure 5a. Cependant, lorsqu'émis à partir d'une antenne composée d'un réseau disjoint de panneaux rayonnants, le faisceau tend vers celui de la figure 5a.

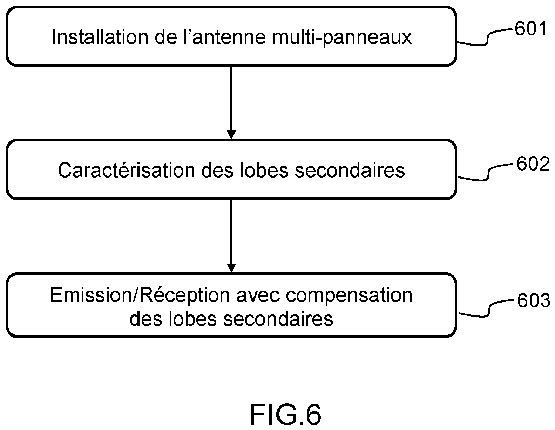

L'objet de la présente invention porte également sur un procédé d'émission ou de réception mis en oeuvre à partir d'une antenne réseau formé de multiples panneaux rayonnants. Ce procédé est représenté sous la forme d'un diagramme à la figure 6. Il peut être décomposé en deux parties :

- une partie préliminaire 601 et 602 de caractérisation des interférences générées par l'agencement relatif des panneaux rayonnants, et
- un partie opérationnelle 603 d'émission/réception de signaux RF en prenant en compte les interférences caractérisées.

Les deux parties peuvent être mises en oeuvre indépendamment. En effet, la première peut être réalisée avant l'installation de l'antenne pour son utilisation sur le terrain d'opération puisque les interférences générées sont identiques pour deux situations où le nombre de panneaux rayonnants et leur agencement est similaire. La caractérisation des interférences peut alors être faite lors de l'installation de l'antenne, au préalable, à partir des panneaux rayonnants utilisés pour constituer l'antenne réseau, à partir d'autres panneaux rayonnants de mêmes tailles, ou même à partir d'un logiciel de simulation du rayonnement de l'antenne réseau.

Pour ceci, dans un premier temps 601, *N* panneaux rayonnants sont disposés côte à côte, horizontalement, verticalement ou dans les deux directions. Les positions relatives des panneaux rayonnants, c'est à dire les écarts entre ces différents panneaux et leurs orientations, sont relevées et stockées dans une mémoire. Avantageusement, ces positions peuvent être obtenues par des mesures réalisées par des équipements de mesure de métrologie intégrés au radar tels que des télémètres laser.

Dans un deuxième temps 602, l'antenne réseau est configurée pour émettre un signal RF dans une direction de pointage donnée, de préférence dans un environnement reproduisant la propagation du signal en espace libre, comme par exemple une chambre anéchoïque. Le gain maximum de l'antenne est orienté par mise en forme du signal RF transmis à chacun des éléments rayonnants, en considérant une loi de commande globale prenant en compte la totalité de l'antenne réseau. Le diagramme de rayonnement de l'antenne est ensuite mesuré, afin d'identifier la direction des lobes secondaires générés par les écarts entre les panneaux rayonnants. L'opération est renouvelée pour chacune des directions de pointage envisagées dans le contexte opérationnel.

La caractérisation peut également être réalisée de manière logicielle. Dans ce cas, un modèle correspondant à l'antenne réseau multi-panneaux rayonnants est constitué dans un logiciel de simulation numérique mis en oeuvre afin de mesurer le diagramme de rayonnement, et d'identifier les directions et niveaux des lobes secondaires associés à chaque direction de pointage envisagée de l'antenne.

A l'issue de ces deux étapes, la direction des lobes secondaires générés par les écarts entre panneaux rayonnants de l'antenne réseau multi-panneaux est connue pour les directions de pointage envisagées. Ces directions sont stockées dans une mémoire permettant d'y accéder lors de la mise en oeuvre de l'antenne réseau.

Ces deux étapes 601 et 602 peuvent être réitérées pour différents agencements des panneaux rayonnants, en faisant varier leur nombre et/ou leurs agencements respectifs (positions et/ou écarts).

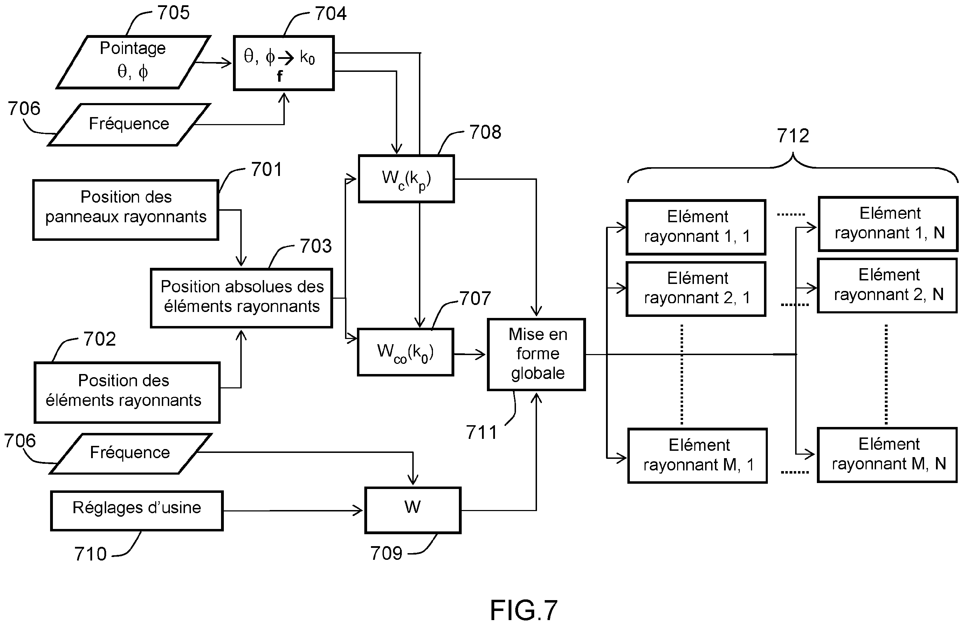

Le procédé comprend également une étape 603 de mise en oeuvre de d'émission et/ou de la réception de signaux RF prenant en compte la position des lobes secondaires en fonction de la disposition des panneaux rayonnants. La figure 7 représente plus en détails cette étape de mise en oeuvre d'un procédé d'émission/réception sur une antenne multi-panneaux selon un mode de réalisation de l'invention.

Un dispositif de gestion centralisé des lois de commande, tel que le dispositif 361 représenté à la figure 3, est configuré pour prendre en compte la position relative 701 des panneaux antennaires et la position 702 des éléments rayonnants au sein de chaque panneau rayonnant pour déterminer une position absolue 703 de chacun des éléments rayonnants au sein de l'antenne réseau. Des paramètres de fonctionnement 704 sont connus du dispositif de centralisé, comprenant un azimut et une élévation souhaités pour le pointage 705 du faisceau de l'antenne, ainsi qu'une fréquence de fonctionnement 706.

A partir des paramètres de fonctionnement 704 et de la position 703 des éléments rayonnants, le dispositif de gestion de l'antenne est configuré pour calculer la loi de commande permettant de déterminer le jeu de coefficients $W_{co}$

707 applicable à l'antenne réseau pour orienter le faisceau de l'antenne dans la direction de pointage voulue, sans prendre en compte les interférences générées par l'utilisation de différents panneaux rayonnants.

Le dispositif de gestion de l'antenne est également configuré pour calculer la ou les lois de commande permettant de déterminer le jeu de coefficients $W_c$ 708 applicable à l'antenne réseau pour atténuer les remontées de lobes secondaires liés dues à l'utilisation de différents panneaux rayonnants. Ces coefficients sont calculés à partir des informations concernant les lobes secondaires stockées en mémoire lors de l'étape 602, sélectionnées en fonction de l'agencement de panneaux rayonnants, de la direction de pointage visée et de la fréquence de fonctionnement de l'antenne.

Avantageusement, le dispositif de gestion de l'antenne est également configuré pour récupérer dans une mémoire un jeu de coefficients de calibration $W$ 709 correspondant à des réglages d'usine 710 associés aux éléments rayonnants pour la fréquence de fonctionnement 706.

Le dispositif de gestion de l'antenne est également configuré pour calculer un coefficient de mise en forme global 711 pour chacun des éléments rayonnants, correspondant à la somme du coefficient $\omega_{co}$ (issu du jeu de coefficients $W_{co}$ 707) avec l'opposé des $P$ coefficients $\omega_c$ (issu du jeu de coefficients $W_c$ 708), complété le cas échéant par le coefficient de calibration associé (issu du jeu de coefficients $W$ 709). Chaque coefficient de mise en forme global est utilisé pour mettre en forme les signaux reçus de l'élément rayonnant correspondant 712 de l'antenne réseau.

Les traitements 707, 708 et 711 de la figure 7 sont réalisés à chaque changement d'un des paramètres 704 de fonctionnement, comme la direction de pointage de l'antenne, la fréquence ou le nombre/l'agencement 701 des panneaux rayonnants.

Dans un mode de réalisation avantageux, les coefficients $W_c$ correspondant aux coefficients de mise en forme applicables aux éléments rayonnants pour réduire le niveau des lobes secondaires pour chacune des directions de pointage considérées, sont calculés lors de l'étape 602 de caractérisation des lobes secondaires, puis stockés dans une mémoire permettant d'y accéder lors de la mise en oeuvre de l'antenne réseau. L'étape 708 se limite alors à la sélection du jeu de coefficients correspondant aux paramètres d'agencement et de fonctionnement de l'antenne réseau.

Avantageusement, il en est de même pour les coefficients $W_{co}$ devant être appliqués à chacun des éléments rayonnants pour orienter le gain maximum de l'antenne réseau dans la direction de pointage souhaitée sans tenir compte des interférences générées par les écarts entre les panneaux rayonnants, ce qui simplifie l'étape 707.

Avantageusement, les jeux de coefficients de mise en forme stockés en mémoire correspondent à la somme du coefficient $W_{co}$ et de l'opposé du ou des coefficients $W_c$ pour chaque élément rayonnant de l'antenne. Ce nouveau jeu de coefficients est associé à des paramètres concernant la direction de pointage, la fréquence et la disposition des panneaux rayonnants. Avantageusement, les coefficients de calibration $W$ sont également pris en compte dans la somme stockée en mémoire lors de l'étape 602.

Ces modes de réalisation alternatifs du procédé selon l'invention permettent de réduire la charge de calculs temps réel devant être exécutés par le dispositif de gestion centralisé des coefficients de mise en forme du signal RF utilisé pour former les faisceaux.

L'antenne réseau objet de la présente invention est constituée d'une pluralité de panneaux rayonnants indépendants reliés à un dispositif centralisé de gestion de la formation des faisceaux. Elle répond donc bien au besoin exprimé de facilité d'adaptation des performances au besoin opérationnel puisqu'il suffit de rajouter des panneaux rayonnants pour augmenter la taille de l'antenne et donc améliorer ses performances. Elle répond également bien au besoin de facilité de transport et de déploiement car les éléments qui la composent sont mécaniquement indépendants, et peuvent être transportés indépendamment. Enfin, sa complexité de mise en oeuvre est faible puisque les interférences générées par les différents panneaux peuvent être caractérisées et les paramètres de mise en forme calculés en amont de la mise en oeuvre de l'antenne sur le terrain d'opérations.

## Revendications

1. Antenne réseau comprenant :

   - une pluralité de panneaux rayonnants mécaniquement disjoints (300-1, 300-N) disposés côte à côte, chaque panneau rayonnant comprenant une pluralité d'éléments rayonnants (301-1, 30M-1, 301-N, 30M-N),
   - des moyens d'application (351-1, 35M-1, 351-N, 35M-N) d'une mise en forme à des signaux radiofréquence transmis par ou reçus depuis chaque élément rayonnant, et
   - un dispositif (361) de gestion des moyens d'application d'une mise en forme des signaux radio fréquence, dans laquelle les moyens d'application d'une mise en forme sont configurés pour appliquer au signal transmis par ou reçu de chaque élément rayonnant un coefficient complexe de mise en forme,
   l'antenne réseau étant **caractérisée en ce que** ledit coefficient complexe de mise en forme correspond à une somme entre au moins :

◦ un coefficient de mise en forme ($W_{co}$) permettant d'orienter le gain maximum de l'antenne dans une direction donnée, et

◦ au moins l'opposé d'un coefficient de mise en forme ($W_c$) permettant d'orienter le gain maximum de l'antenne dans la direction d'un lobe secondaire résultant d'écarts entre les panneaux rayonnants de l'antenne réseau.

2. Antenne réseau selon la revendication 1, dans laquelle la somme utilisée pour calculer le coefficient de mise en forme appliqué aux éléments rayonnants comprend en outre un coefficient de calibration ($W$).

3. Antenne réseau selon l'une des revendications précédentes, dans laquelle le coefficient de mise en forme ($W_{co}$) permettant d'orienter le gain maximum de l'antenne dans une direction donnée est calculé à partir de la direction de pointage souhaitée de l'antenne réseau, de la fréquence du signal radiofréquence, de la position de l'élément rayonnant considéré au sein de l'antenne réseau, et du nombre d'éléments rayonnants total de l'antenne réseau.

4. Antenne réseau selon l'une des revendications précédentes, dans laquelle le coefficient de mise en forme ($W_c$) permettant d'orienter le gain maximum de l'antenne dans la direction d'au moins un lobe secondaire résultant d'écarts entre les panneaux rayonnants de l'antenne réseau est calculé à partir de la direction dudit lobe secondaire, de la fréquence du signal radiofréquence, de la position de l'élément rayonnant considéré au sein de l'antenne réseau, et du nombre d'éléments rayonnants total de l'antenne réseau.

5. Antenne réseau selon l'une des revendications précédentes utilisée pour recevoir un signal radiofréquence, comprenant en outre des moyens de sommation (362-1, 362-N, 381) des signaux reçus de chacun des éléments rayonnants et mis en forme.

6. Procédé d'émission ou de réception d'un signal radiofréquence pour une antenne réseau comprenant une pluralité de panneaux rayonnants (300-1, 300-N) disposés côte à côte, chaque panneau rayonnant comprenant une pluralité d'éléments rayonnants (301-1, 30M-1, 301-N, 30M-N), le procédé comprenant l'application (603) d'un coefficient complexe de mise en forme (711) au signal transmis par ou reçu de chaque élément rayonnant, **caractérisé en ce que** ledit coefficient de mise en forme correspond à une somme entre au moins :

◦ un coefficient de mise en forme (707) permettant d'orienter le gain maximum de l'antenne réseau dans une direction donnée, et

◦ au moins l'opposé d'un coefficient de mise en forme (708) permettant d'orienter le gain maximum de l'antenne dans la direction d'un lobe secondaire résultant d'écarts entre les panneaux rayonnants de l'antenne réseau.

7. Procédé d'émission ou de réception d'un signal radiofréquence selon la revendication précédente, comprenant en outre une étape préalable (602) de caractérisation de lobes secondaires résultant d'écarts entre les panneaux rayonnants de l'antenne réseau.

**Patentansprüche**

1. Gruppenantenne, die Folgendes umfasst:

- eine Vielzahl von nebeneinander angeordneten mechanisch disjunkten Strahlplatten (300-1, 300-N), wobei jede Strahlplatte eine Vielzahl von Strahlelementen (301-1, 30M-1, 301-N, 30M-N) umfasst,
- Mittel (351-1, 35M-1, 351-N, 35M-N) zum Anwenden einer Formung auf Hochfrequenzsignale, die von jedem Strahlelement gesendet oder davon empfangen werden, und
- eine Vorrichtung (361) zum Verwalten der Mittel zum Anwenden von Formung auf die Hochfrequenzsignale,

wobei die Mittel zum Anwenden von Formung zum Anwenden eines komplexen Formungskoeffizienten auf das von jedem Abstrahlelement gesendete oder davon empfangene Signal konfiguriert sind,
wobei die Gruppenantenne **dadurch gekennzeichnet ist, dass** der komplexe Formungskoeffizient einer Summe entspricht zwischen mindestens:

◦ einem Formungskoeffizienten ($W_{co}$), der es zulässt, den maximalen Gewinn der Antenne in eine gegebene Richtung zu orientieren, und

◦ mindestens dem Gegenteil eines Formungskoeffizienten ($W_c$), der es zulässt, den maximalen Gewinn der Antennen in die Richtung einer Nebenkeule zu lenken, die aus Abständen zwischen den Strahlplatten der Gruppenantenne resultiert.

2. Gruppenantenne nach Anspruch 1, wobei die Summe, die zum Berechnen des auf die Strahlelemente angewandten Formungskoeffizienten verwendet wird, ferner einen Kalibrierungskoeffizienten ($W$) enthält.

3. Gruppenantenne nach einem der vorhergehenden Ansprüche, wobei der Formungskoeffizient ($W_{co}$), der es zulässt, den maximalen Gewinn der Antenne in eine gegebene Richtung zu orientieren, auf der Basis der gewünschten Zeigerichtung der Gruppenantenne, der Frequenz des Hochfrequenzsignals, der Position des betrachteten Strahlelements innerhalb der Gruppenantenne und der Gesamtzahl der Strahlelemente der Gruppenantenne berechnet wird.

4. Gruppenantenne nach einem der vorhergehenden Ansprüche, wobei der Formungskoeffizient ($W_c$), der es zulässt, den maximalen Gewinn der Antenne in der Richtung mindestens einer Nebenkeule zu orientieren, die aus Abständen zwischen den Strahlplatten der Gruppenantenne resultiert, auf der Basis der Richtung der Nebenkeule, der Frequenz des Hochfrequenzsignals, der Position des betrachteten Strahlelements innerhalb der Gruppenantenne und der Gesamtzahl der Strahlelemente der Gruppenantenne berechnet wird.

5. Gruppenantenne nach einem der vorhergehenden Ansprüche, die zum Empfangen eines Hochfrequenzsignals verwendet wird und ferner Mittel (362-1, 362-N, 381) zur Summierung der von jedem der Strahl- und geformten Elemente empfangenen Signale umfasst.

6. Verfahren zum Senden oder Empfangen eines Hochfrequenzsignals für eine Gruppenantenne, das eine Vielzahl von nebeneinander angeordneten Strahlplatten (300-1, 300-N) umfasst, wobei jede Strahlplatte eine Vielzahl von Strahlelementen (301-1, 30M-1, 301-N, 30M-N) umfasst, wobei das Verfahren das Anwenden (603) eines komplexen Formungskoeffizienten (711) auf das von jedem Strahlelement gesendete oder davon empfangene Signal umfasst, **dadurch gekennzeichnet, dass** der Formungskoeffizient einer Summe entspricht zwischen mindestens:

   ∘ einem Formungskoeffizienten (707), der es zulässt, den maximalen Gewinn der Antenne in eine gegebene Richtung zu orientieren, und
   ∘ mindestens dem Gegenteil eines Formungskoeffizienten (708), der es zulässt, den maximalen Antennengewinn in die Richtung einer Nebenkeule zu lenken, die aus Abständen zwischen den Strahlplatten der Gruppenantenne resultiert.

7. Verfahren zum Senden oder Empfangen eines Hochfrequenzsignals nach dem vorhergehenden Anspruch, das ferner einen Vorabschritt (602) des Charakterisierens von Nebenkeulen umfasst, die aus Abständen zwischen den Strahlplatten der Gruppenantenne resultieren.

**Claims**

1. An array antenna, comprising:

   - a plurality of mechanically separate radiating panels (300-1, 300-N) arranged side-by-side, each radiating panel comprising a plurality of radiating elements (301-1, 30M-1, 301-N, 30M-N),
   - means (351-1, 35M-1, 351-N, 35M-N) for applying a shaping to radio frequency signals transmitted by or received from each radiating element, and
   - a device (361) for managing the radio frequency signal shaping application means,

      wherein the shaping application means are configured to apply, to the signal transmitted by or received from each radiating element, a complex shaping coefficient,
      the array antenna being **characterised in that** said complex shaping coefficient corresponds to a sum of at least:

         ∘ a shaping coefficient ($W_{co}$) making it possible to orient the maximum gain of the antenna in a given direction, and
         ∘ at least the opposite of a shaping coefficient ($W_c$) making it possible to orient the maximum gain of the antenna in the direction of a side lobe resulting from differences between the radiating panels of the array antenna.

2. The array antenna according to claim 1, wherein the sum used to calculate the shaping coefficient applied to the radiating elements further comprises a calibration coefficient (W).

3. The array antenna according to one of the preceding claims, wherein the shaping coefficient ($W_{co}$), which makes it possible to orient the maximum gain of the antenna in a given direction, is calculated from the desired pointing direction of the array antenna, from the frequency of the radio frequency signal, from the position of the radiating element considered within the array antenna, and from the total number of radiating elements of the array antenna.

4. The array antenna according to one of the preceding claims, wherein the shaping coefficient ($W_c$), which makes it possible to orient the maximum gain of the antenna in the direction of at least one side lobe resulting from intervals between the radiating panels of the array antenna, is calculated from the direction of said side lobe, from the frequency of the radio frequency signal, from the position of the radiating element considered within the array antenna, and from the total number of radiating elements of the array antenna.

5. The array antenna according to one of the preceding claims, used to receive a radio frequency signal and further comprising means (362-1, 362-N, 381) for summing the signals received from each of the radiating and shaped elements.

6. A method for the transmission or reception of a radio frequency signal for an array antenna comprising a plurality of radiating panels (300-1, 300-N) arranged side-by-side, each radiating panel comprising a plurality of radiating elements (301-1, 30M-1, 301-N, 30M-N), the method comprising the application (603) of a complex shaping coefficient (711) to the signal transmitted by or received from each radiating element, **characterised in that** said shaping coefficient corresponds to a sum of at least:

   ◦ a shaping coefficient (707) which makes it possible to orient the maximum gain of the array antenna in a given direction, and
   ◦ at least the opposite of a shaping coefficient (708) which makes it possible to orient the maximum gain of the antenna in the direction of a side lobe resulting from intervals between the radiating panels of the array antenna.

7. The method for the transmission or reception of a radio frequency signal according to the preceding claim, further comprising a preliminary step (602) of characterisation of side lobes resulting from intervals between the radiating panels of the array antenna.

Amplitude — 102

Phase — 103

## FIG.1a

110   111   112   113

Amplitude

Phase   120   121   122   123

## FIG.1b

130

Amplitude

131

Phase

## FIG.1c

141　　　142　　　143　　　144

151　　152　　153

Amplitude

150

Phase

## FIG.1d

Etat de l'art

FIG.2

EP 4 000 131 B1

FIG.3

FIG.4a

FIG.4b

FIG.5a

FIG.5b

Installation de l'antenne multi-panneaux — 601

Caractérisation des lobes secondaires — 602

Emission/Réception avec compensation des lobes secondaires — 603

FIG.6

FIG.7

EP 4 000 131 B1

**EP 4 000 131 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6496158 B1
- FR 2784803 A1
- US 4596986 A
- US 2009135085 A1
- US 2015349434 A1